Europäisches Patentamt

(19) European Patent Office

Office européen des brevets

(11) Numéro de publication: **0 042 017**
**B1**

(12) **FASCICULE DE BREVET EUROPEEN**

(45) Date de publication du fascicule du brevet: **24.10.84**

(21) Numéro de dépôt: **80200569.4**

(22) Date de dépôt: **17.06.80**

(51) Int. Cl.³: **H 02 K 7/102**

(54) **Moto-réducteur avec frein.**

(43) Date de publication de la demande:
**23.12.81 Bulletin 81/51**

(45) Mention de la délivrance du brevet:
**24.10.84 Bulletin 84/43**

(84) Etats contractants désignés:
**AT BE CH DE FR GB IT LI LU NL SE**

(56) Documents cités:
**FR-A-1 333 986**
**FR-A-1 433 626**
**FR-A-2 251 452**
**FR-A-2 418 127**

(73) Titulaire: **ATELIERS DE CONSTRUCTIONS**
**ELECTRIQUES DE CHARLEROI (ACEC) Société**
**Anonyme**
**Avenue Lloyd George 7**
**B-1050 Bruxelles (BE)**

(72) Inventeur: **Gennaux, Jean**
**Rue du Petit Floreffe, 25**
**B-6300 Acoz (BE)**

Courier Press, Leamington Spa, England.

## Description

Il existe de nombreux moto-réducteurs avec frein. Les uns sont équipés de freins agissant sur les éléments mécaniques du réducteur tournant à basse vitesse, les autres possèdent des freins qui agissent directement sur le moteur électrique ou sur les éléments mécaniques tournant à grande vitesse. Or, pour absorber de façon adiabatique l'energie cinétique acquise par un véhicule en mouvement, il faut que le dispositif de freinage soit constitué d'une certaine masse. Si cette masse est répartie sur un ou plusieurs éléments mécaniques tournant à grande vitesse, la fabrication et l'utilisation de ces éléments mécaniques posent d'importants problèmes d'équilibrage. De plus, le freinage d'éléments tournant à grande vitesse engendre des phénomènes thermiques difficiles à maîtriser. A l'inverse, si le freinage est réalisé sur des éléments tournant à basse vitesse, il faut, pour disposer d'une puissance de freinage suffisante, développer un couple de freinage très important. Dans ce cas, les dimensions et le poids des pièces constitutives de ces mécanismes sont élevés et engendrent des problèmes d'encombrement et de tare peu compatibles avec les concepts modernes des véhicules. D'une façon générale, tous ces freins sont disposés à l'intérieur même de cette unité mécanique que constitue le moto-réducteur-frein et lors du freinage, ils engendrent des calories qui échauffent fortement le bain d'huile et reccourcissent le temps de vie du lubrifiant.

Dant le brevet FR—A—2251452, les disques de freins sont situés à l'intérieur d'un carter et tournent à grande vitesse. De la sorte, ils contribuent fortement à échauffer le lubrifiant. De plus, l'accès aux disques du frein pour une vérification ou une réparation n'est pas immédiat et augmente les temps d'intervention du personnel. Par ailleurs, dans le brevet FR—A—1433626, le dispositif de freinage est extérieur et tourne à vitesse moyenne mais il est imbriqué dans un ensemble mécanique qui, n'étant pas coaxial à l'arbre moteur, est de plus grand encombrement et ne peut s'utiliser pour des roues de petit diamètre.

La présente invention concerne un moto-réducteur avec frein selon la revendication 1 et remédie à ces inconvénients en réalisant le freinage sur des éléments mécaniques placés à l'extérieur du carter du motor-réducteur-frein et tournant à vitesse moyenne. De la sorte, les éléments de freinage, disposés, à l'extérieur, sont bien refroidis et sont très accessibles pour la commande, la vérification et la réparation. Les parties rotatives du dispositif de freinage ont des masses suffisantes pour absorber l'énergie cinétique du véhicule de façon adiabatique et ne posent aucun problème d'équilibrage puisqu'elles tournent à vitesse modérée. Les parties fixes du dispositif de freinage peuvent développer une grande puissance de freinage par application d'un couple modéré et elles sont de poids et d'encombrement réduits.

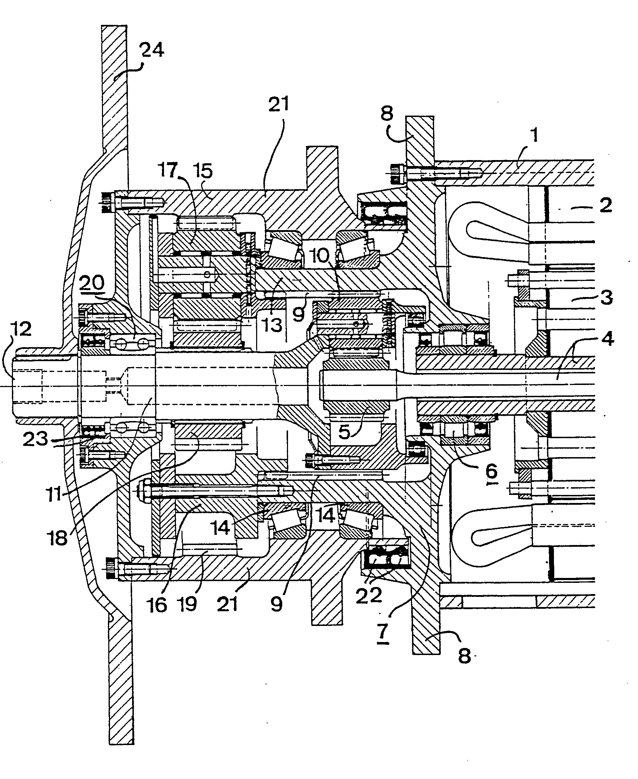

L'invention est exposée plus en détails à l'aide de l'unique figure représentant une coupe du moto-réducteur-frein.

Une carcasse 1 supporte un stator 2 d'un moteur électrique dont le rotor 3 tourne à grande vitesse. Ce rotor 3 est équipé d'un arbre élastique 4 portant à une extrémité un pignon 5 qui engrène avec un premier train d'engrenages du réducteur. L'arbre élastique 4 pose sur deux paliers dont un seul palier 6 est représenté sur la figure. Le palier 6 appartient à un élément mécanique intermédiaire 7 qui assure également d'autres fonctions. En effet, cet élément mécanique intermédiaire 7 est muni d'une collerette servant de bride de fixation 8 de toute l'unité mécanique. En plus, le corps central de cet élément mécanique intermédiaire 7 présente une symétrie de révolution et est nanti à l'intérieur, d'une couronne dentée 9 sur laquelle tournent des pignons satellites 10 d'un arbre 11 tournant à moyenne vitesse et présentant un embout extérieur 12. Le corps central de l'élément mécanique intermédiaire 7 fait également office de fusée 13 en recevant les roulements 14 d'un moyeu de roue 15. Enfin l'élément mécanique intermédiaire 7 sert de support au porte-satellites 16 du second train d'engrenages du réducteur. Sur le porte-satellites 16 sont montés les satellites 17 engrenant d'une part avec un pignon 18 solidaire de l'arbre 11 tournant à vitesse moyenne et d'autre part avec une couronne intérieure 19 appartenant au moyeu de roue 15. Ce moyeu de roue 15 remplit également plusieurs fonctions. Outre celle déjà signalée qui consiste à servir de couronne intérieure dentée 19 du second train d'engrenages du réducteur, il supporte un palier 20 de l'arbre 11 tournant à moyenne vitesse et fait office de carter 21 pour l'ensemble du réducteur en assurant l'étanchéité par l'intermédiaire de doubles joints d'etanchéite 22 et 23.

Cette unité mécanique présente donc un embout 12 tournant à vitesse moyenne et qui dans sa version préférée porte un disque de freinage 24 rendu solidaire par des moyens appropriés. Ce disque de freinage 24 tourne à vitesse moyenne et est d'une masse suffisante pour réaliser un freinage adiabatique sans soulever des difficultés d'équilibrage. En outre les parties fixes du frein, non représentées, collaborent avec le disque de freinage 24 pour développer une puissance de freinage importante par application d'un couple de freinage modéré. Ces parties fixes de frein peuvent donc être constituées d'éléments mécaniques de poids et d'encombrement réduits. D'autre part, la position extérieure de tous les éléments du frein offre la garantie d'un excellent refroidissement des parties actives, simplifie tout le système de commande du frein et donne l'avantage d'une grande accessibilité pour la vérification et la réparation.

## Revendications

1. Moto-réducteur avec frein comprenant en une seule unité mécanique un moteur électrique (1—4) tournant à grande vitesse, un moyeu de roue (15) tournant à basse vitessee un disque de freinage (24) et un réducteur de vitesse disposés coaxialement.

caractérisé en ce que le disque de freinage (24) tourne à vitesse moyenne et est situé à l'extérieur de l'unité mécanique.

2. Moto-réducteur avec frein selon la revendication précédente caractérisé en ce que le réducteur comprend un élément mécanique intermédiaire (7) servant à la fois de palier (6) au moteur tournant à grande vitesse, de fusée (13) pour le moyeu (15) de la roue tournant à basse vitesse, de couronne dentée (9) pour le premier train d'engrenages du réducteur, de support du porte-satellites (16) du second train d'engrenages du réducteur et de bride de fixation (8) de toute l'unité mécanique.

3. Moto-réducteur avec frein selon l'une des revendications précédentes caractérisé en ce qu'un axe mécanique (11), servant de support de pignon (18) du second train d'engrenages, est coaxial à l'arbre moteur (4), tourne à la vitesse moyenne et possède un embout extérieur (12).

## Patentansprüche

1. Getriebemotor mit Bremse, bestehend aus, in einer einzigen mechanischen Einhait, einem Elektromotor, der mit hoher Geschwindigkeit rotiert, und einer Untersetzung, die eine Radnabe (15) mit niedriger Geschwindigkeit antreibt,

dadurch gekennzeichnet, daß eine Welle (11), die mit mittlerer Geschwindigkeit rotiert, ein äußeres Ansatzstück (12) aufweist, das eine Bremsscheibe (24) trägt.

2. Getriebemotor mit Bremse gemäß dem vorhergehenden Anspruch, dadurch gekennzeichnet, daß die Untersetzung ein mechanisches Zwischenelement (7) aufweist, das zugleich als Lager (6) für den mit großer Geschwindigkeit rotierenden Motor, als Achsschenkel (13) für die Nabe (15) des mot niedriger Geschwindigkeit rotierenden Rades, als Zahnkranz (9) für die erste Getriebeeinheit der Untersetzung, als Halterung für den Planetenrad-Träger (16) der zweiten Getriebeeinheit der Untersetzung, und als Befestigungsflansch (8) für die gesamte mechanische Einheit dient.

3. Getriebemotor mit Bremse gemäß einem der vorhergehenden Ansprüche, dadurch gekennzeichnet, daß ein bewegliches mechanisches Element, das mit niedriger Geschwindigkeit rotiert, zugleich als Radnabe (15), Gehäuse (21) für die Untersetzung, Innenzahnkranz (19) für die zweite Getriebeeinheit der Untersetzung, und als Lager (20) für die mit mittlerer Geschwindigkeit rotierende und mit einem äußeren Ansatzstück (12) ausgerüstete Welle (11) dient.

## Claims

1. Geared motor with brake, comprising in a single mechanical unit an electric motor rotating at high speed and a reduction gearing driving a wheel hub (15) at a low speed, characterised in that a shaft (11) rotating at medium speed comprises an external stub shaft (12) supporting a brake disc (24).

2. Geared motor with brake according to the preceding claim, characterised in that the reduction gearing comprises an intermediate mechanical element (7) serving at the same time as a bearing (6) for the high-speed motor, as a journal (13) for the wheel hub (15) rotating at low speed, as toothed annulus (9) for the first gear train of the reduction gearing, as a support for the planet wheel carrier (16) of the second gear train of the reduction gearing, and as a securing flange (8) for the whole mechanical unit.

3. Geared motor with brake according to one of the preceding claims, characterised in that a movable mechanical element rotating at low speed serves at the same time as a wheel hub (15), as a casing (21) for the reduction gearing, as an internally toothed annulus (19) for the second gear train of the reduction gearing, and as bearing (20) for the shaft (11) which rotates at a medium speed and which has an external stub shaft (12).